## Europäisches Patentamt
## European Patent Office
## Office européen des brevets

(19)

(11) Numéro de publication : **0 334 696 B1**

(12) **FASCICULE DE BREVET EUROPEEN**

(45) Date de publication du fascicule du brevet :
30.10.91 Bulletin 91/44

(51) Int. Cl.⁵ : **B60N 2/06**

(21) Numéro de dépôt : **89400528.9**

(22) Date de dépôt : **24.02.89**

(54) **Glissière de sécurité à galets pour sièges de véhicules.**

(30) Priorité : **22.03.88 FR 8803690**

(43) Date de publication de la demande :
**27.09.89 Bulletin 89/39**

(45) Mention de la délivrance du brevet :
**30.10.91 Bulletin 91/44**

(84) Etats contractants désignés :
**AT BE CH DE ES GB GR IT LI LU NL SE**

(56) Documents cités :
**FR-A- 2 390 625**
**US-A- 3 171 698**

(73) Titulaire : **A. & M. COUSIN Etablissements
COUSIN FRERES
Le Bois de Flers
F-61103 Flers Cédex Orne (FR)**

(72) Inventeur : **Pipon, Yves
La Garenne St Georges des Groseillers
F-61100 Flers (FR)**

(74) Mandataire : **Madeuf, René Louis et al
Cabinet Madeuf Conseils en Propriété
Industrielle 3, Avenue Bugeaud
F-75116 Paris (FR)**

## Description

La présente invention a pour objet une glissière de sécurité utilisée pour le réglage horizontal d'avant en arrière des sièges dans des véhicules, en particulier, dans des véhicules automobiles. De telles glissières sont connues par exemple par FR-A-2390625.

On rappellera d'abord que, très souvent maintenant, les carrosseries monoblocs des véhicules nécessitent pour les glissières la mise en place sur le côté externe du siège, d'une glissière placée verticalement par rapport au plancher tandis que le côté interne du siège est supporté par une glissière disposée horizontalement c'est-à-dire que le profilé inférieur repose par son fond sur le plancher du véhicule et supporte, de ce fait, par différents organes non seulement le poids du passager mais également les efforts dus au coulissement du siège, coulissement commandé par un organe de débrayage des glissières placé souvent en haut du dossier, ce qui a pour effet de créer un couple de torsion considérable et que la glissière horizontale interne est particulièrement sollicitée et déformée, ce qui crée des coincements de la partie mobile par rapport à la partie fixe. Ainsi, le siège se manoeuvre difficilement risquant d'être bloqué dans une position non choisie par l'utilisateur et, en cas de chocs, la glissière qui doit résister à des efforts considérables est très vite détruite en n'absorbant pas suffisamment d'énergie d'où une augmentation du risque pour le passager placé sur le siège.

La présente invention remédie à ces inconvénients en créant, soit pour les deux glissières, soit pour la glissière placée côté intérieur du siège dans le cas où le côté extérieur de ce siège comporte un autre type de glissière, un élément dont la constitution permet un coulissement très régulier et sans coincement quels que soient les efforts exercés sur cette glissière horizontale.

En effet, il est prévu une augmentation substantielle du jeu entre chaque aile du profilé supérieur et chaque aile du profilé inférieur ce qui évite le contact entre les deux profilés.

De plus, des pièces complémentaires légèrement élastiques suppriment tous jeux latéral et vertical de la glissière considérée et, finalement, également autorisent le rattrapage des défauts de planéité du plancher du véhicule et même des structures sur lesquelles sont fixées les glissières du siège considéré.

Conformément à l'invention, la glissière de sécurité à galets pour sièges de véhicule dans laquelle le profilé inférieur à section en U présente des ailes verticales rabattues horizontalement pour former un chemin de guidage supérieur et un chemin de roulement inférieur afin de coopérer avec des billes, des galets étant placés entre les ailes du profilé fixe et les ailes repliées du profilé supérieur mobile comportant des ondulations longitudinales de raidissement, lesdits galets étant guidés, d'une part, à l'aide d'ailes verticales du profilé supérieur mobile et, d'autre part, à l'aide du chemin de guidage supérieur formé par chaque aile du profilé fixe inférieur, est caractérisée en ce que lesdites ailes repliées du profilé supérieur mobile maintiennent des éléments de guidage pour les galets, ces éléments de guidage reposant sur une partie horizontale desdites ailes repliées et en ce que ledit guidage des galets assure une résistance transversale et une résistance à l'arrachement considérables du profilé supérieur mobile par rapport au profilé fixe.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une élévation latérale, partie arrachée, d'une glissière.

La fig. 2 est une coupe suivant la ligne II-II de la fig. 1.

La fig. 3 est une vue à très grande échelle de la partie droite de la glissière des fig. 1 et 2.

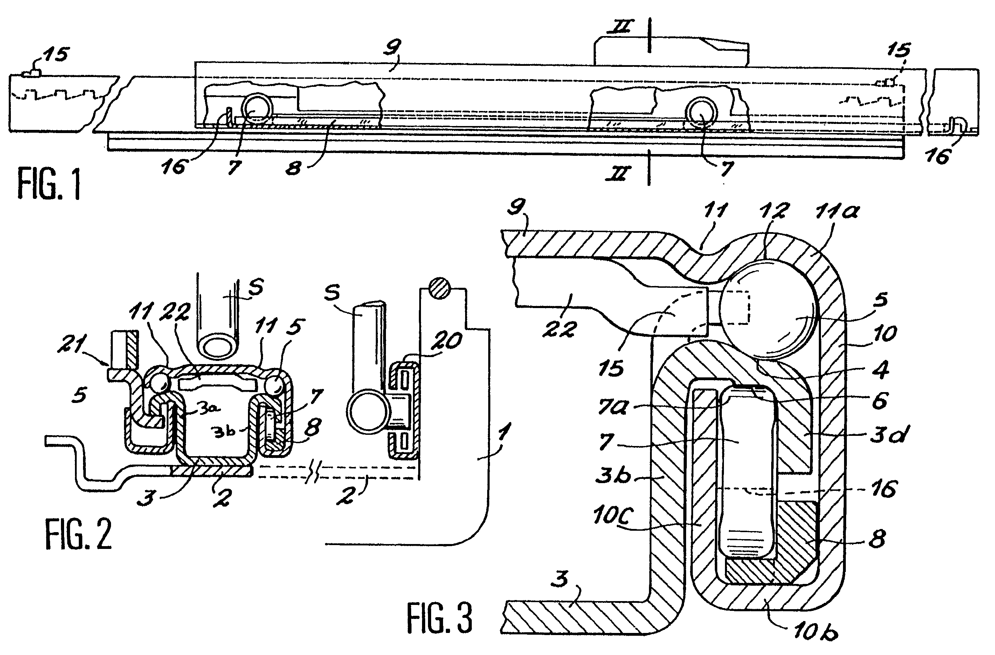

Aux fig. 1 et 2, on a représenté schématiquement la partie inférieure d'une caisse de véhicule 1 qui porte un plancher 2 pouvant être le support sur lequel se fixe le profilé 3 inférieur fixe à section en U d'une glissière horizontale. Les ailes latérales 3a, 3b du profilé 3 sont recourbées horizontalement à leur extrémité supérieure pour former d'abord un chemin de roulement 4 pour des billes 5 puis rabattues verticalement en 3d pour être sensiblement parallèles aux ailes verticales 3a, 3b. La partie inférieure centrale des ailes 3a, 3b est conformée de façon à constituer un chemin de guidage supérieur 6 pour des galets 7 destinés à rouler par paire sur un élément de guidage 8 à section en L reposant dans la partie horizontale 10b des ailes 10 du profilé supérieur mobile 9. Ce dernier comporte sur sa face supérieure, de part et d'autre de sa zone centrale des ondulations longitudinales de raidissement 11 qui forment avec l'arrondi 11a que suit chaque ondulation 11 vers l'extérieur un chemin de guidage 12 pour les billes 5.

Finalement, les ailes 10 sont repliées verticalement en 10c parallèlement aux ailes 3a, 3b du profilé fixe inférieur 3, ces parties verticales 10c terminales des ailes 10 pouvant passer aisément entre d'une part la face extérieure des ailes 3a, 3b et, d'autre part, maintenant les galets 7 du côté opposé aux éléments de guidage 8.

Il est également prévu, comme cela est visible aux fig. 1 et 3, des butées 15 limitant les déplacements des billes 5 et des butées 16 limitant le déplacement des galets 7 afin que le profilé supérieur mobile 9 de la glissière horizontale ne puisse pas dépasser une distance avant et arrière bien définie suivant le type du véhicule considéré.

Le siège qui est schématisé à la fig. 2 en S repose à l'extérieur sur une glissière verticale 20 d'une constitution quelconque mais dont la partie fixe est solidaire de la partie inférieure de la caisse 1 du véhicule.

Ainsi, les efforts transversaux et les efforts d'arrachement sont absorbés pour leur plus grande partie par la glissière horizontale intérieure qui se trouve, du fait même de sa constitution, résister parfaitement à ces efforts car, d'une part, les ailes 3a, 3b du profilé fixe inférieur 3 et, d'autre part, les ailes 10 du profilé supérieur 9 sont conformées de façon à permettre une excellente résistance mais également cette résistance est augmentée du fait des éléments de guidage 8 placés à la partie inférieure des extrémités du profilé supérieur mobile 9 coopérant avec les galets 7.

Le verrou 21 d'un type quelconque permet de maintenir en position choisie le profilé mobile supérieur 9 par rapport au profilé fixe inférieur 3.

De plus, le dessus du profilé 9 est renforcé, en premier lieu, par les ondulations longitudinales 11 et, en second lieu, par une traverse 22 (voir fig. 2 et 3) qui coopère avec les butées 15 de limitation de déplacement des billes 5 sous le profilé 9.

Il est à signaler que les galets 7 qui ont, en général, chacun un bourrelet circulaire débordant 7a et les éléments de guidage 8 sont réalisés le plus souvent en matière plastique appropriée par moulage ou autre procédé analogue.

La constitution des galets 7 et des éléments de guidage 8 en matière plastique appropriée, en général légèrement élastique, a pour objet le rattrapage complet des jeux verticaux et latéraux que pourraient avoir la glissière considérée et, de plus, permet de rattraper les défauts de planéité du plancher du véhicule ou de la structure du véhicule sur lequel est montée la glissière considérée.

## Revendications

1. Glissière de sécurité à galets pour sièges de véhicule dans laquelle le profilé fixe inférieur (3) à section en U présente des ailes verticales (3a, 3b) rabattues horizontalement pour former un chemin de guidage supérieur (6) et un chemin de roulement inférieur (4) afin de coopérer avec des billes (5), des galets (7) étant placés entre les ailes (3a, 3b) du profilé fixe (3) et les ailes repliées (10) d'un profilé supérieur mobile (9) comportant des ondulations longitudinales de raidissement (11), lesdits galets (7) étant guidés, d'une part, à l'aide d'ailes verticales (10c) du profilé supérieur mobile (9) et, d'autre part, à l'aide du chemin de guidage supérieur (6) formé par chaque aile (3b, 3d) du profilé fixe inférieur (3), caractérisée en ce que lesdites ailes repliées (10) du profilé supérieur mobile (9) maintiennent des éléments de guidage (8) pour les galets (7), ces éléments de guidage (8) reposant sur une partie horizontale (10b) desdites ailes repliées (10), et en ce que ledit guidage des galets (7) assure une résistance transversale et une résistance à l'arrachement considérables du profilé supérieur mobile (9) par rapport au profilé fixe (3).

2. Glissière suivant la revendication 1, caractérisée en ce que les galets (7) et les éléments de guidage (8) sont réalisés en matière plastique appropriée par moulage ou autre procédé analogue.

## Patentansprüche

1. Sicherheitsschiene mit Rollen für Fahrzeugsitze, bei welcher das feste, untere Profil (3) mit U-förmigem Querschnitt zwei vertikale Seitenteile (3a, 3b) aufweist, die horizontal umgebogen sind, um eine obere Führung (6) und einen unteren Rollweg (4) zum Zusammenwirken mit Kugeln (5) und zwischen den Seitenteilen (3a, 3b) des festen Profiles (3) und umgebogenen Seitenteilen (10) eines beweglichen, oberen Profiles (9) angeordneten Rollen (7) zu bilden, wobei das bewegliche Profil (9) in Längsrichtung verlaufende Aussteifungswellungen (11) aufweist, und die Rollen (7) durch die vertikalen Flügel (10c) des beweglichen, oberen Profiles (9) und anderseits durch die von jedem der Seitenteile (3b, 3d) des festen, unteren Profiles (3) gebildete obere Führung (6) geführt sind, dadurch gekennzeichnet, daß die umgebogenen Seitenteile (10) des beweglichen, oberen Profiles (9) Führungselemente (8) für die Rollen (7) halten, welche Führungselemente (8) auf einem horizontalen Abschnitt (10b) der besagten umgebogenen Seitenteile (10) aufliegen, und daß die besagte Führung der Rollen (7) eine Festigkeit in Querrichtung und beträchtliche Festigkeit gegen ein Lösen des beweglichen, oberen Profiles (9) vom festen Profil (3) aufweist.

2. Sicherheitsschiene gemäß Anspruch 1, dadurch gekennzeichnet, daß die Rollen (7) und die Führungselemente (8) durch Formgießen oder ähnliche Verfahren aus geeignetem Plastikmaterial hergestellt sind.

## Claims

1. Safety slide with rollers for vehicle seats in which the lower U-shaped profile is formed with vertical wings (3a, 3b) bent horizontally for forming an upper guiding path (6) and a lower rolling path (4) in order to cooperate with balls (5), rollers (7) being placed between the wings (3a, 3b) of the fixed profile (3) and the bent wings (10) of an upper mobile profile (9) comprising stiffening longitudinal corrugations (11), said rollers (7) being guided, on the one hand, by vertical wings (10c) of the upper mobile profile (9) and, on the other hand, by the upper guiding path (6) formed by each wing (3b, 3d) of the lower fixed profile (3) characterized in that said bent wings (10) of the upper mobile profile (9) maintain a set of guiding elements (8) for the rollers (7), these guiding elements (8) bearing on an horizontal part (10b) of said bent wings (10), and in that said guiding of the rollers (7) ensures a considerable transverse and tearing strengths of the upper mobile profile (9) with respect to the fixed profile (3).

2. Slide according to claim 1, characterized in that the rollers (7) and the guiding elements (8) are made of an appropriate plastics material by moulding or other similar process.

FIG.1

FIG.2

FIG.3